# EUROPEAN PATENT APPLICATION

(11) **EP 1 191 769 A2**
(43) Date of publication of application: **27.03.2002**
(21) Application number: 01440259.8
(22) Date of filing: 06.08.2001
(51) Int. Cl.: H04M 1/66, H04M 1/725

(54) **Mobile telephone comprising a means for silently responding to a telephone call**

(30) Priority: 18.08.2000 AU 5344600
(71) Applicant: ALCATEL, 75008 Paris (FR)
(72) Inventor: Aveling, Ben, AU-Sydney 2015 (AU)
(74) Representative: Rausch, Gabriele, Dr.

(57) **Abstract**

This invention provides an arrangement to enable a mobile phone user to interactively provide silent messages during a phone call. This may be used, for example, when the user is in a situation where he or she does not wish to speak, for example, when the user receives a call in a meeting or concert.

On receipt of an incoming call the user has the choice of making a spoken response or selecting on e of a plurality of RVAs stored in memory in the phone.

## Description

This invention provides an arrangement to enable a mobile phone user to interactively provide silent messages during a phone call. This may be used, for example, when the user is in a situation where he or she does not wish to speak, for example, when the user receives a call in a meeting or concert.

US 5058150 (SamSung Electronics Co., Ltd) discloses a vehicle radio-telephone having an automatic answering device for automatically responding to an incoming call. The device automatically provides a pre-programmed response in response to the radio-telephone status. This device does not provide for an interactive response by the user.

EP 0812120 (Nokia Mobile Phones Ltd) relates to the use of intelligent network services from a terminal, and particularly to the downloading of new services into an intelligent card in the terminal. This patent does not disclose a means for conducting an interactive conversation with a caller.

This specification discloses a telephone having an interactive silent response facility, the telephone including:
- a control processor receiving control signals from other elements of the phone and controlling the operation of some of the elements of the phone;
- a keypad connected to send key signals to the processor,
- a digitized voice message store storing two or more RVAs (Recorded Voice Announcements), the processor controlling the readout of RVAs for transmission in response to signals from the keypad.

According to an embodiment of the invention the telephone further includes a voice message recording facility for the user to record RVAs.

Figure 1 is a block diagram representing functional elements of the phone utilized in an embodiment of the invention.

Figure 2 is a flow diagram showing an example of the use of the invention.

The invention will be described with reference to the embodiments shown in the drawings.

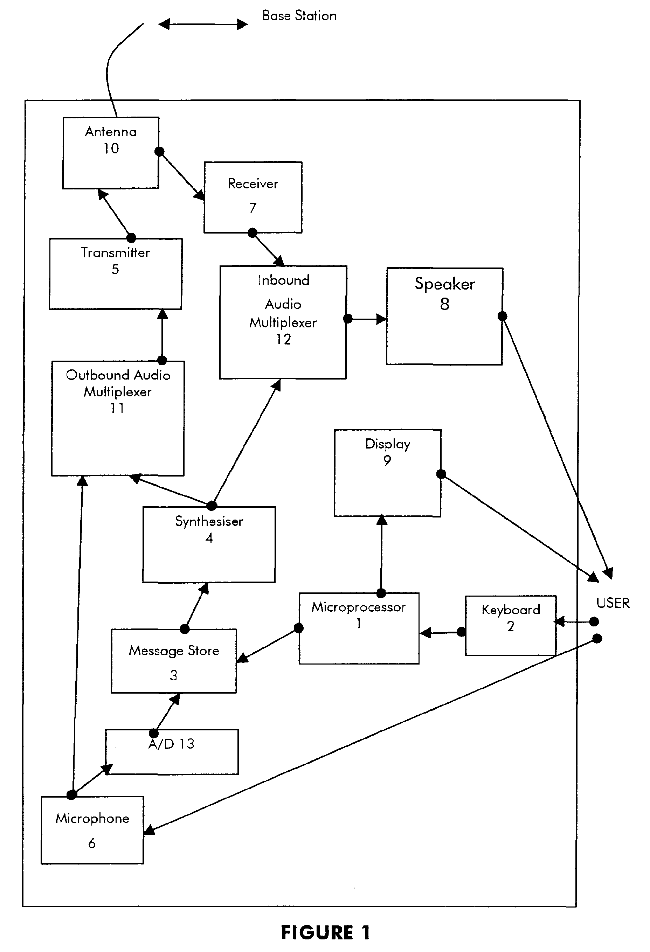

Figure 1 is a block diagram showing elements of a mobile phone used in implementing an embodiment of the phone.

The invention will be described in the context of a digital phone, such as a GSM phone.

With reference to Figure 1, the relevant elements are:
- a microprocessor 1 which receives inputs from various elements and controls much of the functionality of the phone;
- a keypad 2 connected to the processor, and including a "hook-switch" button to enable call establishment (this may be a "soft" switch which can be assigned different functions at appropriate times).
- a message store 3 storing, inter alia, digitized voice messages;
- a speech synthesizer 4 to convert digitized voice messages to a format suitable for transmission via transmitter 5 (alternatively the digitized voice messages may be stored in a format where they can be utilized in a digital stage of the transmission circuit);
- a microphone 6 to pick up audio signals for transmission via transmitter 5;
- a receiver 7 adapted to receive incoming signals and voice message and to send the signals to the microprocessor and the voice messages to a speaker 8;
- a display 9 controlled by microprocessor 1 for displaying information, soft key functionality, selection menus etc;
- and an A/D converter between the microphone and message store.

The coding and modulation used in GSM is well documented and widely accessible (see, eg, http://www.gsmdata.com/overview.htm). Speech is coded using a Regular Pulse Excited - Linear Predictive Coder (RPE-LPC). It is modulated onto the carrier using Gaussian-filtered Minimum Shift Keying (GMSK).

The operation of the interactive silent response facility will be described with reference to the accompanying drawings by considering a typical "Conversation" using the facility.

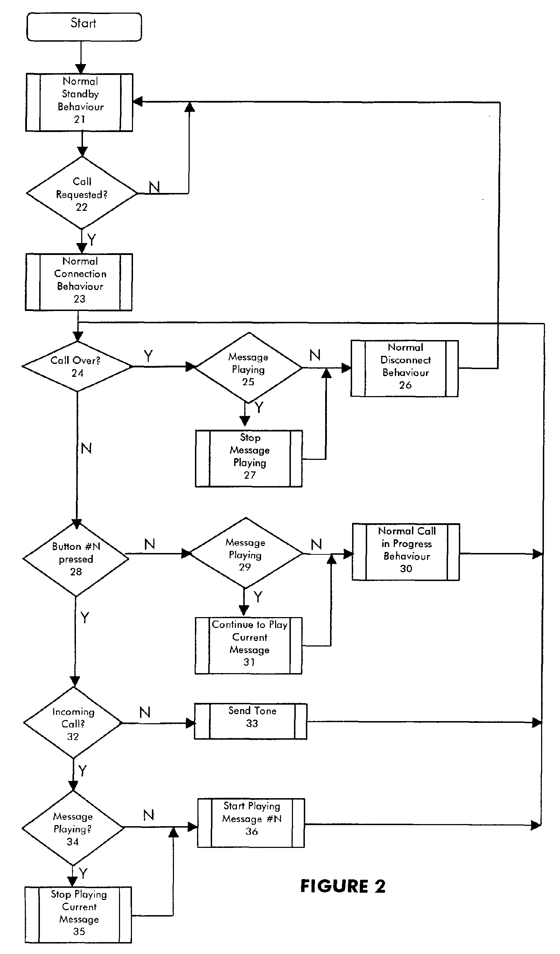

As shown in Figure 2, when an incoming call is received when the user has the phone in the "silent vibrate" mode, the user can operate the "Off-hook" switch and a message such as "Response Press 1" is displayed.

The user may choose either to speak with no further button operation or the user may press button 1 on Keypad 2 which causes the Microprocessor 1 to retrieve a digitized message corresponding to eg, " I can hear you but cannot speak now" to be returned from message store 3, transmitted to synthesizer 4 which converts it to a voice message which is applied to transmitter 5 and is transmitted to the caller.

This process is illustrated in Figure 2 where at 21, the phone is on standby until, at 22, an incoming call is detected. The processor 1 monitors the call status at 24, and then checks whether the user pressed a key at 28. At 32, the Microprocessor confirms that the message is an incoming. This optional step allows the user to send DTMF signals on outgoing calls, and RVA (recorded voice announcement) messages on incoming calls. Optionally the phone may display "soft" key options permitting the user to choose RVA or DTMF.

As the call is an incoming call, the microprocessor then checks whether another message is playing (Step 34). If no other message is playing, the Microprocessor initiates the chosen message (step 36)

If another message is playing, the Microprocessor first discontinues that other message (step 35) before initiating the newly requested message.

Throughout this whole process, the user's ability to send a normal voice message via Microphone 6 is maintained. The Microphone 6 output and the output of Synthesizer 4 are combined in a speedy combiner 11.

As can be seen from steps 34, 35, 36, the user can initiate a new message at any time during the conversation.

From steps 24, 25, 26, 27, when the call is terminated, the Microprocessor checks to see a message is playing before continuing with normal disconnect procedure.

The loop including steps 28, 29, 30, 31 permits a message to be played through if no other button is pressed and the call is not terminated.

Steps 32, 33 enable the user to send DTMF tones if the user is making an outgoing call. Alternatively, the user can be given an option at this point or in the phones configuration options to select DTMF or RVA .

As can be seen, this routine permits a user to send any chosen messages.

Preferably the Microprocessor will display a table of messages and their corresponding buttons. The following table shows examples of messages which could be stored.
1. Hello. I can hear you but I can't talk
2. Yes
3. No
4. Can I call you back? Please leave your number.
5. Can you hold?
6. Good bye.

With such a table of messages, it is possible for the user to carry on a limited interactive conversation without the need to speak.

The output of the Microphone 6 may be applied to an analog-to-digital converter 13 under the control microprocessor 1. The A/D converter's output can then be stored in message store 3.

This enables the user to personalize messages stored in store 3. Using the Keypad, the user cails up the Message store function from a menu displayed in display 9, selects an available message number, and records a message via the microphone and A/D converter.

## Claims

1. A telephone having an interactive silent response facility, the telephone including:
- a control processor receiving control signals from other elements of the phone and controlling the operation of some of the elements of the phone;
- a keypad connected to send key signals to the processor,
- a digitized voice message store storing two or more RVAs, the processor controlling the readout of RVAs for transmission in response to signals from the keypad.

2. A telephone as claimed in claim 1 wherein the digitized RVA are applied to a voice synthesizer and applied to the transmission path of the telephone.

3. A telephone as claimed in claim 1 or 2 wherein the RVAs are applied to the receive path of the telephone.

4. A telephone as claimed in any one of claims 1 to 3 including an analog-to-digital converter to convert messages from the microphone to digital format for storage in the message store under control of the microprocessor.

5. A method of providing an interactive silent response facility for the telephone, the method including;
- storing two or more interactive RVAs
- making available an option for the user to speak or send an RVA;
- when the user chooses to send an RVA, sending the RVA chosen by the user;
- and where the call is to be terminated, terminating an ongoing RVA before terminating the call;
- where the user chooses to override the ongoing RVA with a subsequent RVA, terminating the ongoing RVA before initiating the subsequent RVA;
- where the user chooses a subsequent RVA, transmitting the subsequent RVA.

6. A method as claimed in claim 5 including,
- storing digitized personalized RVAs in the message store for subsequent selection and transmission.

7. A telephone having an interactive silent response facility substantially as herein described with reference to the accompanying drawings.

8. A method of providing an interactive silent response facility substantially as herein described with reference to the accompanying drawings.
